# EUROPÄISCHE PATENTSCHRIFT

(11) **EP 1 600 008 B1**
(45) Veröffentlichungstag und Bekanntmachung des Hinweises auf die Patenterteilung: **05.03.2008**
(21) Anmeldenummer: 04715242.6
(22) Anmeldetag: 27.02.2004
(51) Int. Cl.: H04N 13/00, H04N 7/24, H04N 7/26

(54) **VERFAHREN ZUR KOMPRIMIERTEN ÜBERTRAGUNG VON BILDDATEN FÜR EINE 3-DIMENSIONALE DARSTELLUNG VON SZENEN UND OBJEKTEN**
METHOD FOR THE COMPRESSED TRANSMISSION OF IMAGE DATA FOR THREE-DIMENSIONAL REPRESENTATION OF SCENES AND OBJECTS
PROCEDE DE TRANSMISSION DE DONNEES D'IMAGES SOUS FORME COMPRIMEE POUR UNE REPRESENTATION TRIDIMENSIONNELLE DE SCENES ET D'OBJETS

(30) Priorität: 27.02.2003 DE 10308810
(43) Veröffentlichungstag der Anmeldung: 30.11.2005
(73) Patentinhaber: T-Mobile Deutschland GmbH, 53227 Bonn (DE)
(72) Erfinder: MOSSAKOWSKI, Gerd, 59227 Ahlen (DE)
(74) Vertreter: Riebling, Peter
(86) Internationale Anmeldenummer: PCT/DE2004/000380
(87) Internationale Veröffentlichungsnummer: WO 2004/077838

(56) Entgegenhaltungen:
- EP-A- 0 588 410
- WO-A-97/10675
- DE-A- 10 113 880
- DE-A- 10 231 286
- US-A- 5 864 640
- US-A- 6 055 274
- US-A1- 2002 159 628
- US-B1- 6 191 808
- US-B1- 6 441 844
- SIMON S: "GENERALIZED RUN-LENGTH CODING FOR SNR-SCALABLE IMAGE COMPRESSION" SIGNAL PROCESSING : THEORIES AND APPLICATIONS, PROCEEDINGS OF EUSIPCO, XX, XX, 13. September 1994 (1994-09-13), Seiten 560-563, XP008007229
- FORMAN M ET AL: "COMPRESSION OF INTEGRAL 3D TV PICTURES" INTERNATIONAL CONFERENCE ON IMAGE PROCESSING AND ITS APPLICATIONS, LONDON, GB, Nr. 410, 4. Juli 1995 (1995-07-04), Seiten 584-588, XP000613545
- MARSHALL S: "APPLICATION OF IMAGE CONTOURS TO THREE ASPECTS OF IMAGE PROCESSING: COMPRESSION, SHAPE RECOGNITION AND STEREOPSIS" IEE PROCEEDINGS I. SOLID- STATE & ELECTRON DEVICES, INSTITUTION OF ELECTRICAL ENGINEERS. STEVENAGE, GB, Bd. 139, Nr. 1 PART 1, 1. Februar 1992 (1992-02-01), Seiten 1-8, XP000292350 ISSN: 0956-3776

## Beschreibung

Die vorliegende Erfindung betrifft ein Verfahren zur komprimierten Übertragung von Bilddaten für eine 3-dimensionale Darstellung von Szenen und Objekten.

Die Erfindung basiert auf einem Verfahren zur Übertragung von zusätzlichen Daten innerhalb einer Videodatenübertragung zwischen einem Sender und einem Empfänger nach dem Verfahren der priorisierten Pixelübertragung, wie es im nächsten Absatz beschrieben ist. Die Videodaten bestehen aus einer Vielzahl von einzelnen Bildern. Jedes Bild definiert ein Bildarray von Bildpunkten (Pixeln). Die Videodaten jedes Bildes werden in einzelne Pixelgruppen eingeteilt, wobei jede Pixelgruppe einen Positionswert innerhalb des Bildarrays und mindestens einen Pixelwert aufweist. Die minimale Größe des Bildarrays ist durch die Höhe h und Breite b eines Videobildes, angegeben in Bildpunkten, definiert. Bei der Übertragung der zusätzlichen Daten werden Positionswerte verwendet, die nicht in den eigentlichen Videodaten vorkommen, sondern einem Offset-Bereich des Bildarrays zugeordnet sind.

Die eigentliche. Übertragung der Bilddaten basiert auf einem Verfahren zur Komprimierung und Dekomprimierung von Bild- und Videodaten mittels priorisierender Pixelgruppen, wie es in der Druckschrift DE 101 13 880 A1 beschrieben ist. DE 101 13 880 A1 offenbart ein Verfahren zur Komprimierung und Dekomprimierung von Videodaten, die aus einem Array einzelner Bildpunkte (Pixel) bestehen, wobei jedes Pixel einen sich zeitlich verändernden Pixelwert aufweist, der Farb- oder Helligkeitsinformation des Pixels beschreibt. Jedem Pixel wird eine Priorität zugeordnet und die Pixel entsprechend ihrer Priorisierung in einem Prioritätenarray abgelegt. Dieses Array enthält zu jedem Zeitpunkt, die nach der Priorisierung sortierten Pixelwerte. Entsprechend der Priorisierung werden diese Pixel, und die für die Berechnung der Priorisierung benutzten Pixelwerte, übertragen bzw. abgespeichert. Ein Pixel bekommt eine hohe Priorität, wenn die Unterschiede zu seinen benachbarten Pixel sehr groß sind. Zur Rekonstruktion werden die jeweils aktuellen Pixelwerte auf dem Display dargestellt. Die noch nicht übertragenden Pixel werden aus den schon übertragenden Pixeln berechnet. Im Einklang mit Merkmalen des Anspruchs 1 offenbart die DE 101 13 880 A1 also ein Verfahren, geeignet zur komprimierten Übertragung von Bilddaten unter Verwendung einer Videodatenübertragung nach dem Verfahren der priorisierten Pixelübertragung, bei dem die Videodaten jedes Bildes durch einzelne Pixelgruppen festgelegt werden und jede Pixelgruppe einen Positionswert innerhalb der Positionen eines Bildarrays und mindestens einen zugeordneten Pixelwert aufweist, wobei die Größe des Bildarrays durch die Höhe h und Breite b eines Videobildes, angegeben in Bildpunkten bzw. Pixeln, definiert ist, und bei dem für jede Pixelgruppe der aufeinanderfolgenden Bilder ein Prioritätswert ermittelt wird und vorrangig für Pixelgruppen der höchsten Priorität deren Positionswerte und Pixelwerte übertragen werden.

Der Aufsatz von Serge Simon "Generalized Run-Length Coding for SNR-scalable Image Compression", in Proceedings of EUSIPCO-94, 7th European Signal Processing Conference, September 1994, XP008007229, Seiten 560-563 schlägt unter dem Thema verallgemeinerter Lauflängencodierung vor, die wichtigsten Pixel eines Bildes vorrangig zu übertragen, nach vorheriger Sortierung der Pixel nach ihrer Priorität.

Die US 6 191 808 B1 offenbart Verfahren zur stereoskopischen Bilddarstellung. Insbesondere wird vorgeschlagen, eine von der Betrachterposition abhängige Zwischenbilddarstellung aus einer Mehrzahl vorhandener/erzeugter Bildperspektiven Bildpaaren zu interpolieren.

Der Artikel von Forman, M. et al. "Compression of Integral 3D TV Pictures", Intl. Conference on Image Processing and its Applications, London, Nr. 410, 4. Juli 1995, Seiten 584-588, XP000613545 und die Veröffentlichung WO 97 10675 A1 betreffen die Kompression von 3D-Festbildern und 3D-Bewegtbildern. Wegen der Möglichkeit, die starke Korrelation zwischen Nachbarbildern, d.h. Bildern benachbarter Aufnahmeperspektiven, auszunutzen, wird ein hoher Kompressionsfaktor erwartet. Für die Kompression zweiter bzw. weiterer Perspektiven eines 3D-Bildes wird DPCM vorgeschlagen, für die Intra-Perspektiv-Codierung 2D-DCT. Für 3D-Bewegtbilder wird vorgeschlagen, 2D-DCT durch 3D-DCT zu ersetzen. Als Alternative dazu wird vorgeschlagen, die Bewegungskomponente mittels Bewegungskompensation zu komprimieren. Bei der Decodierung ist dann entsprechend das Bild einer Perspektive aus den codierten Daten dieser Perspektive und den Daten einer zuvor decodierten Perspektive rekonstruierbar.

Die US-A-6 055 274 zeigt ein ähnliches Verfahren wie die beiden zuletzt genannten Veröffentlichungen auf. Im Unterschied zu letzteren Dokumenten wird eine Bewegungsschätzung zwischen benachbarten Perspektiven vorgenommen, und darauf beruhend eine bewegungskompensierte (prädiktiv-differentielle) Codierung für jede Perspektive innerhalb eines 3D-Bildes. Die bewegungskompensierte Codierung entspricht dem bei der Kompressionscodierung digitaler Videosignale (aufeinanderfolgende Bilder) in bekannter Weise angewandten Verfahren.

Die Veröffentlichung EP 0 588 410 A1 offenbart wiederum ein Verfahren zur Komprimierung stereoskopischer Videodaten, nach welchem beispielsweise die Daten einer linken Bildperspektive in oben genannter und bekannter Weise einer bewegungskompensierten prädiktiv-differentiellen Kompressionscodierung unterzogen werden. Die Codierung der Daten der rechten Bildperspektive erfolgt entsprechend, jedoch wird je nach Korrelation zwischen linker und rechter Perspektive gegebenenfalls eine prädiktive Codierung der rechten Perspektive ganz oder teilweise auf der Grundlage von Daten der linken Perspektive durchgeführt. Bei der Decodierung wird entsprechend die rechte Perspektive ganz, teilweise, oder gar nicht mittels Daten der linken Perspektive rekonstruiert.

Die US 6 441 844 B1 zeigt ein weiteres Beispiel zur Kompressionscodierung stereoskopischer Videodaten unter Ausnutzung der Korrelation zwischen linken und rechten Teilbildern und unter Verwendung von Differenzbildern und Bewegungskompensation.

In dem Aufsatz von Marshall, S. et al. "Application of Image Contours to three Aspects of Image Processing: Compression, Shape Recognition and Stereopsis", IEE Proceedings-1, Solid State and Electron Devices, Vol. 139, No. 1, Februar 1992, XP000292350, Seiten 1-8, wird vorgeschlagen, eine Kompression und Speicherung von Bilddaten anhand der Bildkonturen durchzuführen.
Die US-A-5 864 640 offenbart ein Verfahren zum optischen Scannen von dreidimensionalen Objekten, wobei das gescannte Objekt in Form von Positions- und Farbwerten dargestellt wird.
Ein ähnliches Verfahren ist aus US 2002 0159628 A1 bekannt, wobei hier das erfasste Objekt in Form von Konturdaten und Texturdaten definiert wird.

Im wesentlichen sind zwei unterschiedliche Verfahren zur Übertragung von 3-dimensionalen Szenen und Objekten bekannt.
Zum einen ist es bekannt, eine Szene oder ein Objekt aus unterschiedlichen Kameraperspektiven aufzunehmen und diese Daten zu übertragen. Bei dem anderen Verfahren werden die Objekte oder Szenen mit Hilfe von Gittermodellen modelliert und gespeichert bzw. übertragen. Die Gitter bilden dann die Umhüllende der einzelnen Objekte oder Szenen. Die Lage der Gitter im 3-dimensionalen Raum wird durch Gitterpunke bestimmt. Die Flächen zwischen den Gitterpunkten werden durch Texturen, die meist getrennt von der Gitterstruktur übertragen werden, aufgefüllt. Diese Methode wird hauptsächlich im Bereich von Computerspielen eingesetzt, bei denen künstliche Objekte mit Hilfe des Computers generiert werden. Der Vorteil besteht in der Möglichkeit, die Objekte/Szenen unter verschiedenen Umständen (z.B. Betrachtungswinkel, Beleuchtung durch unterschiedliche Beleuchtungen) darzustellen. Bei natürlichen Objekten (z.B. reale Personen, Pflanzen) ist es jedoch zur Zeit noch nicht möglich diese in Echtzeit in ein entsprechendes Gittermodell umzuwandeln.

Aus diesem Grund wird heute für natürliche Aufnahmen in aller Regel eine Übertragung nach dem ersten Verfahren mit Hilfe von verschiedenen Kameraperspektiven durchgeführt. Der Mensch kann räumlich sehen, indem er eine Szene gleichzeitig mit beiden Augen wahrnimmt. Dabei nehmen die Augen die gleiche Szene leicht unterschiedlich wahr. Das menschliche Gehirn erzeugt aus diesen unterschiedlichen Wahrnehmungen ein räumliches Bild. Diese Tatsache machen sich unter anderem auch 3D-Filme zu nutze, indem bei deren Betrachtung der Mensch auf dem linken und auf dem rechten Auge ein (leicht) unterschiedliches Bild angeboten bekommt. Praktische Ausprägungen sind z.B. Brillen, die entweder die Farbe (rot/grün) oder die Polarisierung des Lichtes (horizontal/vertikal) entsprechende Bilder für das linke und rechte Auge herausfiltern können. Die zu übermittelnden Bilder für die Augen unterscheiden sich in aller Regel nur minimal. Insbesondere bei Objektkanten macht sich eine solche Differenz bemerkbar. Dieser Umstand kann bei dem vorliegenden Übertragungsverfahren ausgenutzt werden. Der Einfachheit halber wird im folgenden die vom linken Auge aufgenommene Bildinformation als Bild 1 und die vom rechten Auge wahrgenommene Bildinformation als Bild 2 bezeichnet.

Die Aufgabe der Erfindung besteht darin, eine Videodatenübertragung nach dem Verfahren der priorisierten Pixelübertragung gemäß DE 101 13 880 A1 derart weiterzubilden, dass eine komprimierte Übertragung von 3-dimensionalen oder stereoskopischen Objekten und Szenen über schmalbandige Übertragungssysteme, z.B. GSM/UMTS, und eine nachfolgende Rekonstruktion der übertragenen Bilddaten möglich wird.

Diese Aufgabe wird erfindungsgemäß durch die Merkmale des Patentanspruchs 1 gelöst.

Das erfindungsgemäße Verfahren kann vorteilhaft zur Übertragung und Verarbeitung 3-dimensionaler Objekte und Szenen verwendet werden, indem jede Szene / jedes Objekt aus mindestens zwei Perspektiven aufgenommen wird, wobei eine Perspektive dem eigentlichen Bildarray und die mindestens eine andere Perspektive einem Offset-Bereich des Bildarrays zugeordnet werden. Aus dem Bildarray wird eine höhere Anzahl von Pixelgruppen übertragen als aus dem Offset-Bereich, wobei die Pixel der fehlenden Pixelgruppen des Offset-Bereichs aus den bereits übertragenen Pixelgruppen des Bildarrays berechnet werden.

Vorzugsweise werden für die im Bildarray übertragene Perspektive sowohl Pixelgruppen mit höherer als auch Pixelgruppen mit niedrigerer Priorität übertragen, und für die im Offset-Bereich übertragene Perspektive lediglich Pixelgruppen mit höherer Priorität.

Ein einfaches Ausführungsbeispiel der Erfindung wird nachfolgend erläutert.

Eine Szene wird von mindestens zwei Kameras aufgenommen. Dabei wird eine Kamera als Masterkamera verwendet. Diese könnte eine Übersichtskamera sein und z.B. als Bild 1 definiert werden. Die Masterkamera würde nun einen ersten Bildbereich (Pixel 0...512) entsprechend Bild 1 ausfüllen. Bei der Übertragung würden nicht nur höher priorisierte Pixelgruppen sondern auch niedrig priorisierte Pixelgruppen übertragen werden, um ein Bild mit möglichst guter Qualität zu erhalten. Die andere(n) Kamera(s) nehmen z.B. den zweiten Bildbereich (Pixel 513...1024) auf. Für diesen zweiten Bildbereich ist es in aller Regel nur notwendig, wenige hoch-priorisierte Pixelgruppen zu übertragen, da die noch nicht übertragenden Pixelgruppen unter anderem mit Hilfe der Daten des ersten Bildbereichs berechnet werden können.

Ein Beispiel soll dieses verdeutlichen. Es wird eine Szene mit einem Auto aufgenommen, das zum Beispiel eine Werbebeschriftung trägt. Das Auto mit der Werbebeschriftung wird im ersten Bildbereich deutlich übertragen. Für den zweiten Bildbereich ist es dann ausreichend, nur markante Pixelgruppen des Bildes zu übertragen, so dass eindeutig die Position des Autos im Bild 2 beschrieben ist. Auf die Übertragung der Pixelgruppen für das Bild 2, welche die Werbebeschriftung zeigen würden, könnte verzichtet werden, da diese aus der Beziehung zu Bild 1 rekonstruiert werden können. Damit würde sich für den zweiten Bildbereich eine noch sehr viel höhere Komprimierungsrate als für den ersten Bildbereich ergeben.

Verwendet man mehr als zwei Bildaufnehmer ist es zum Beispiel möglich, präzise 3-D Übertragungen durchzuführen. Anwendungen hierfür bestehen unter anderem in der Filmindustrie oder der Medizintechnik zur Übermittlung von 3-D Bildmaterial, wie z. B. Röntgen- und Kernspinaufnahmen).

Ein wesentliches Merkmal der Erfindung ist daher die erzielbare Datenreduktion bei der Übertragung des zweiten oder weiteren Bildes. Die Erfindung umfasst jedoch noch weitere Vorteile, die auf die Möglichkeit der 3-dimensionalen Übertragung/Verarbeitung zurück zu führen sind.

So kann innerhalb von nicht für die eigentliche Bilddatenübertragung bestimmten Positionswerten, ähnlich wie Sie für Szenenwechsel notwendig sein können, eine Übertragung der Kameraeigenschaften erfolgen, wie z.B. Position der Kameras zueinander, verwendete Brennweiten, Eigengeschwindigkeit der Kameras bei Einsatz in Fahrzeugen oder Flugzeugen, usw.

Zur Bestimmung von Eigenschaften der durch die Bilddaten dargestellten Objekte kann eine Korrelation bestimmter Bilddaten der einzelnen Perspektiven durchgeführt werden.

Die korrelierten Werte können dazu genutzt werden, um die Position, Größe, Geschwindigkeit oder Verformung von Objekten auf einfache Weise eindeutig zu bestimmen. So kann z.B. die mechanische Verformung der Tragflächen eines Flugzeugs bei unterschiedlichen Flugmanövern ermittelt werden. Im medizinischen Bereich könnte das zur Überprüfung der Bewegung verschiedener Muskelgruppen und Gefäßen genutzt werden.

Die korrelierten Werte können andererseits dazu genutzt werden, um auf einfache Weise ein Bild bzw. Video zu erzeugen, dessen Perspektive zwischen den tatsächlich aufgenommenen Perspektiven (Kamerapositionen) liegt. Ein Beispiel kann dies verdeutlichen. Bild 1 ist die Masterkamera und ist auf eine Vase gerichtet. Bild 2 wird von einer anderen Kamera aufgenommen, die die Vase in einem Winkel von 20 Grad bezogen auf die Masterkamera aufnimmt. Mit Hilfe der mittels Korrelation gewonnenen Werte und dem Wissen der verschiedenen Kamerapositionen kann man ein Bild künstlich erzeugen, das die Vase aus dem Blickwinkel einer imaginären Kamera zeigt, die z.B. nur um 10 Grad versetzt zur Masterkamera steht, ohne das eine solche Kamera selbst existieren müsste. Diese Information können dann auf einfache Weise genutzt werden, um die natürlichen Aufnahmen mit künstlichen Informationen anzureichern. Anwendungsszenarien könnte die künstliche Einblendung von Zusatzinformationen sein; bei einem Fußballspiel z.B. eine Linie, die zeigt ob bestimmte Spieler sich im Abseits befinden.

Die Korrelation von Bilddaten verschiedener Perspektiven beruht auf den folgenden Überlegungen. Entsprechend dem Verfahren aus der deutschen Patentanmeldung DE 101 13 880 A1 werden priorisierende Pixelgruppen gebildet. Eckpunkte von Objekten ergeben in der Regel die höchsten Prioritätswerte. Ist z.B. die relative Lage der fünf höchst priorisierten Pixelgruppen zueinander ähnlich der relativen Lage der fünf höchst priorisierten Pixelgruppen der zweiten Kameraposition zueinander, so kann davon ausgegangen werden, dass das gleiche Objekt erfasst wurde. Einzelne Abweichungen können ignoriert werden, solange die verbleibenden Pixelgruppen eine entsprechende gute Korrelation zueinander aufweisen. Aus einer entsprechenden guten Korrelation kann man nun die Abweichungen des gleichen Objektes auf den unterschiedlichen Bildarrays der unterschiedlichen Kameras pixelgenau bestimmen. Liegen nun zusätzliche Informationen, wie z.B. Kamerapositionen, gemeinsame Referenzpunkte, usw., vor, können durch einfache geometrische Berechnungen exakte Größen bestimmt werden. Im Falle einer Videoübertragung kann durch Berücksichtigung der zeitlichen Komponente auch eine Geschwindigkeitsermittlung der Bildobjekte durchgeführt werden. Durch Anwendung der priorisierten Pixelübertragung ist die Anzahl der notwendigen Korrelationen wesentlich geringer als wenn man alle Bildpunkte des einen Bildes mir allen Bildpunkten des anderen Bildes korrelieren müsste, wie es bei herkömmlichen Verfahren durchaus üblich ist. Das hier beschriebene Verfahren vermindert die benötigte Rechenleistung zur Korrelation der Bilddaten erheblich, so dass das vorgestellte Verfahren auch gut in mobilen Geräten, d.h. Geräten mit einer relativ geringeren Rechenleistung, eingesetzt werden kann.

## Patentansprüche

1. Verfahren, geeignet zur komprimierten Übertragung von Bilddaten für eine dreidimensionale Darstellung von Szenen und Objekten,
(a) wobei jede Szene oder jedes Objekt aus mindestens zwei Perspektiven aufgenommen wird;
(b) unter Verwendung einer Videodatenübertragung nach dem Verfahren der priorisierten Pixelübertragung,
(b1) bei dem die Videodaten jedes Bildes durch einzelne Pixelgruppen festgelegt werden,
(b2) bei dem jede Pixelgruppe einen Positionswert innerhalb der Positionen eines Bildarrays und mindestens einen zugeordneten Pixelwert aufweist,
(b3) bei dem die Größe des Bildarrays durch die Höhe h und Breite b eines Videobildes, angegeben in Bildpunkten bzw. Pixeln, definiert ist,
(b4) bei dem für jede Pixelgruppe der aufeinanderfolgenden Bilder ein Prioritätswert ermittelt wird, indem die Unterschiede eines den Positionswert der Pixelgruppe bestimmenden Bezugspixels zu den übrigen Pixeln der Pixelgruppe bestimmt werden
(b5) und nach jeder Ermittlung eines neuen Prioritätswertes die Prioritätswerte der Pixelgruppen in einer Prioritätenliste der Größe nach absteigend sortiert und vorrangig für Pixelgruppen mit der aktuell höchsten Priorität deren Positionswerte und Pixelwerte übertragen werden;
**gekennzeichnet durch**
(c) die Verwendung eines Verfahrens zur Übertragung von Zusatzdaten innerhalb des genannten Verfahrens der Videodatenübertragung,
(c1) wobei die Zusatzdaten, ebenso wie die Videodaten, Positionswerte und zugeordnete Pixelwerte aufweisen und die Positionswerte und Pixelwerte der Zusatzdaten zusammen mit den Videodaten übertragen werden,
(c2) wobei die Positionswerte der Zusatzdaten einem Offset-Bereich des Bildarrays zugeordnet sind,
(c3) und wobei der Offset-Bereich ausschließlich Positionswerte enthält, die nicht Teil des genannten Bildarrays sind;
(d) wobei die Daten einer ersten Perspektive eigentliche Videodaten bilden und die Daten mindestens einer anderen Perspektive die genannten Zusatzdaten bilden,
(d1) wobei die Positionswerte der Zusatzdaten im genannten Offset-Bereich angeordnet sind,
(d2) und wobei für Positionen innerhalb des Bildarrays eine höhere Anzahl von Pixelgruppen übertragen wird als für Positionen im Offset-Bereich;
(e) und wobei Pixelwerte nicht übertragener Pixelgruppen des Offset-Bereichs empfangsseitig aus bereits übertragenen Pixelgruppen des Bildarrays berechnet werden.

2. Verfahren nach Anspruch 1, **dadurch gekennzeichnet, dass** für die im Bildarray übertragene Perspektive sowohl Pixelgruppen mit höherer als auch Pixelgruppen mit niedrigerer Priorität übertragen werden, und für die im Offset-Bereich übertragene Perspektive lediglich Pixelgruppen mit höherer Priorität übertragen werden.

3. Verfahren nach Anspruch1 oder 2, **dadurch gekennzeichnet, dass** zur Bestimmung von Eigenschaften der durch die Bilddaten dargestellten Objekte eine Korrelation bestimmter Bilddaten der einzelnen Perspektiven durchgeführt wird.

4. Verfahren nach Anspruch 3, **dadurch gekennzeichnet, dass** aus den korrelierten Bilddaten die Position, Größe, Geschwindigkeit oder Verformung von Objekten bestimmen wird.

5. Verfahren nach Anspruch 3, **dadurch gekennzeichnet, dass** aus den korrelierten Bilddaten Bilddaten für weitere Perspektiven (Kamerapositionen) erzeugt werden.

## Claims

1. Method, suitable for the compressed transmission of image data for a three-dimensional representation of scenes and objects,
(a) each scene or object being taken from at least two perspectives;
(b) using video data transmission by the prioritised pixel transmission method,
(b1) in which the video data of each image are fixed by individual groups of pixels,
(b2) in which each group of pixels has a position value within the positions of an image array and at least one associated pixel value,
(b3) in which the size of the image array is defined by the height h and width b of a video image, given in picture elements or pixels,
(b4) in which a priority value is ascertained for each group of pixels of the successive images by determining the differences between a reference pixel that determines the position value of the group of pixels and the other pixels of the group of pixels
(b5) and, every time a new priority value is ascertained, the priority values of the group of pixels are then sorted by size in descending order in a priority list and, as a priority for groups of pixels currently with the highest priority, their position values and pixel values are transmitted;
**characterised by**
(c) the use of a method for the transmission of additional data within the aforementioned method of video data transmission,
(c1) the additional data, like the video data, having position values and associated pixel values, and the position values and pixel values of the additional data being transmitted together with the video data,
(c2) the position values of the additional data being assigned to an offset region of the image array,
(c3) and the offset region containing exclusively position values which do not form part of the aforementioned image array;
(d) the data of a first perspective forming actual video data, and the data of at least one other perspective forming the aforementioned additional data,
(d1) the position values of the additional data being arranged in the aforementioned offset region,
(d2) and a higher number of groups of pixels being transmitted for positions within the image array than for positions in the offset region;
(e) and pixel values of untransmitted groups of pixels of the offset region being calculated on the reception side from already transmitted groups of pixels of the image array.

2. Method according to claim 1, **characterised in that**, for the perspective transmitted in the image array, both groups of pixels with a higher priority and groups of pixels with a lower priority are transmitted and, for the perspective transmitted in the offset region, only groups of pixels with a higher priority are transmitted.

3. Method according to claim 1 or 2, **characterised in that**, to determine properties of the objects represented by the image data, correlation of certain image data of the individual perspectives is carried out.

4. Method according to claim 3, **characterised in that** from the correlated image data are determined the position, size, speed or deformation of objects.

5. Method according to claim 3, **characterised in that** from the correlated image data are generated image data for further perspectives (camera positions).

## Revendications

1. Procédé approprié pour la transmission de données d'images sous forme comprimée pour une représentation tridimensionnelle de scènes et d'objets,
(a) chaque scène ou chaque objet étant enregistré à partir d'au moins deux perspectives ;
(b) à l'aide d'une transmission de données vidéo selon le procédé de la transmission pixel prioritaire,
(b1) selon lequel les données vidéo de chaque image sont fixées par des groupes individuels de pixels,
(b2) selon lequel chaque groupe de pixels présente une valeur de position à l'intérieur des positions d'une matrice d'image et au moins une valeur de pixel associée,
(b3) selon lequel la taille de la matrice d'image est définie par la hauteur h et la largeur b d'une image vidéo, indiquée en points d'image ou pixels,
(b4) selon lequel pour chaque groupe de pixels des images successives, on définit une valeur de priorité en définissant les différences entre un pixel de référence qui définit la valeur de position du groupe de pixels, et les autres pixels du groupe de pixels,
(b5) et après chaque détermination d'une nouvelle valeur de priorité, les valeurs de priorité des groupes de pixels sont classées dans une liste de priorités par ordre de taille décroissant, et les valeurs de position et les valeurs de pixels sont transmises en priorité pour les groupes de pixels présentant la priorité momentanément la plus élevée,
**caractérisé par**
(c) l'utilisation d'un procédé de transmission de données supplémentaires à l'intérieur dudit procédé de transmission de données vidéo,
(c1) les données supplémentaires ainsi que les données vidéo présentant des valeurs de position et des valeurs de pixels associées, et les valeurs de position et les valeurs de pixels des données supplémentaires étant transmises avec les données vidéo,
(c2) les valeurs de position des données supplémentaires étant associées à une zone décalée de la matrice d'image,
(c3) et la zone décalée contenant uniquement des valeurs de position qui ne font pas partie de ladite matrice d'image ;
(d) les données d'une première perspective formant les données vidéo proprement dites, et les données d'au moins une autre perspective formant les données supplémentaires,
(d1) les valeurs de position des données supplémentaires étant disposées dans la zone décalée,
(d2) et un nombre supérieur de groupes de pixels étant transmis pour les positions situées à l'intérieur de la matrice d'image, par rapport aux positions situées dans la zone décalée ;
(e) et les valeurs de pixels de groupes de pixels de la zone décalée qui ne sont pas transmis étant calculées côté réception à partir de groupes de pixels de la matrice d'image qui sont déjà transmis.

2. Procédé selon la revendication 1, **caractérisé en ce que** pour la perspective transmise dans la matrice d'image, les groupes de pixels à haute priorité aussi bien que les groupes de pixels à faible priorité sont transmis, et pour la perspective transmise dans la zone décalée, seuls les groupes de pixels à haute priorité sont transmis.

3. Procédé selon la revendication 1 ou 2, **caractérisé en ce que** pour définir des caractéristiques des objets représentés par les données d'image, une corrélation de données d'image définies des perspectives individuelles est réalisée.

4. Procédé selon la revendication 3, **caractérisé en ce qu'**à partir des données d'image corrélées sont définies la position, la taille, la vitesse ou la déformation d'objets.

5. Procédé selon la revendication 3, **caractérisé en ce qu'**à partir des données d'image corrélées sont produites des données d'image pour d'autres perspectives (positions de caméra).
